# EUROPEAN PATENT APPLICATION

(11) **EP 4 711 258 A1**
(43) Date of publication of application: **18.03.2026**
(21) Application number: 25306459.6
(22) Date of filing: 11.09.2025
(51) Int. Cl.: B63B 27/14, B63B 27/36, B63B 35/00, B63B 35/34, B63B 35/44, B63C 1/02, E02B 3/20, B63B 75/00, B63B 77/10

(54) **FLOATING QUAY TO DEPLOY FLOATING UNITS**

(30) Priority: 16.09.2024 EP 24306523
(71) Applicant: Technip Energies France, 92741 Nanterre Cedex (FR)
(72) Inventor: VERGNE, Frederick, 92741 Nanterre Cedex (FR); ALLA, Ahmed, 92741 Nanterre Cedex (FR)
(74) Representative: Edson, Russell Gregory

(57) **Abstract**

A floating quay includes a deck relocatable in a body of water adjacent a stationary quay to receive one or more floating units. The deck includes a gradual slope from an elevation of a surface of the stationary quay to a submerged position below a water level of a water surface of the body of water. The floating quay further includes an elevator system positionable to raise and lower at least a portion the deck to receive the one or more floating units from the stationary quay and to deploy the one or more floating units into the body of water using the gradual slope of the deck.

## Description

### Technical Field

The present disclosure relates generally to deployment of floating units, and more particularly although not necessarily exclusively, to floating quays with slopes used to deploy or recover an offshore floating unit into or from a body of water.

### Background

A floating unit may include a wind turbine mounted to a floating wind-turbine platform and deployed into a body of water. Upon production, wind-caused rotation of a rotor blade of the wind turbine can be used to drive a generator to produce electrical energy. The floating platform may include a column that floats in the body of water to keep the wind turbine above a water level of the body of water in a stable manner. Deployment of the floating platform, with or without a wind turbine already assembled, from a stationary quay into the body of water may be difficult due to the size and weight of the floating platform and a lack of infrastructure at the stationary quay to handle deployment of the floating platform into the body of water. Thus, launching the floating platform from the stationary quay may involve building permanent, tailormade equipment into the stationary quay or loading the floating platform onto an expensive submersible barge for deployment.

### Summary

According to aspects of the present disclosure, a floating quay, a method, and a system for deploying a floating wind-turbine platform, are provided according to one or more of the following examples. As used below, any reference to a series of examples is to be understood as a reference to each of those examples disjunctively (e.g., "Examples 1-4" is to be understood as "Examples 1, 2, 3, or 4"). Various aspects of the present disclosure provide systems and methods for deploying and recovering floating units according to one or more of the following examples:
Example 1 is a floating quay comprising: a deck relocatable in a body of water to a position adjacent a stationary quay to receive one or more floating units, the deck comprising a gradual slope, which may be from an elevation of a surface of the stationary quay to a submerged position below a water level of a water surface of the body of water when the stationary quay is floating in the body of water; and an elevator system positionable to raise and lower at least a portion the deck to receive the one or more floating units from the stationary quay and to deploy the one or more floating units into the body of water using the gradual slope of the deck.
Example 2 is the floating quay of example 1, wherein the elevator system further comprises: a stationary quay detector positionable to detect the elevation of a surface of the stationary quay; and a controller positionable to control raising or lowering of at least the portion of the deck using the elevation of the surface of the stationary quay.
Example 3 is the floating quay of example 2, wherein the elevator system further comprises: at least one ballast compartment positionable to intake water from the body of water to lower the deck and to eject water into the body of water to raise the deck, wherein the controller controls the intake of the water and the ejection of the water at the at least one ballast compartment.
Example 4 is the floating quay of example 3, wherein the at least one ballast compartment comprises: a first ballast compartment positionable to maintain a first end of the deck at the elevation of the surface of the stationary quay; and a second ballast compartment positionable to adjust a magnitude of the gradual slope of the deck from the elevation of the surface of the stationary quay into the submerged position.
Example 5 is the floating quay of example 3, wherein the at least one ballast compartment is positionable at a side of the deck distal from the stationary quay, and wherein the controller is positionable to control purging of water from the ballast compartment prior to the one or more floating units being loaded on the deck and to control intake of water into the ballast compartment subsequent to the one or more floating units being loaded on the deck to generate the gradual slope of the deck.
Example 6 is the floating quay of example(s) 1-5, wherein the deck further comprises a plurality of rollers, a set of rails, a set of air bags, a set of water bags, or a combination thereof positionable along a length of the gradual slope to reduce friction between the one or more floating units and the deck.
Example 7 is the floating quay of example(s) 1-6, wherein the deck further comprises: a horizontal section positionable to engage the stationary quay; and a hinge positionable between the horizontal section and the gradual slope such that a slope of the gradual slope is adjustable at the hinge.
Example 8 is the floating quay of example(s) 1-7, further comprising: at least one towing bitt positionable to engage a towline such that the floating quay is movable to an additional stationary quay.
Example 9 is the floating quay of example(s) 1-8, wherein the elevator system is positionable to lower the submerged position of the deck below the water level of the water surface of the body of water to generate separation between the submerged position of the deck and the one or more floating units.
Example 10 is a method comprising: deploying a relocatable quay through a body of water to a stationary quay; positioning at least a portion of a deck of the relocatable quay at an elevation of a surface of the stationary quay; receiving one or more floating units at the deck of the relocatable quay from the stationary quay; and lowering the one or more floating units into the body of water using a gradual slope of the deck, which slope may be from the elevation of the surface of the stationary quay to a submerged position below a water level of a water surface of the body of water, when the stationary quay is floating in the body of water, to generate separation between the one or more floating units and the deck of the relocatable quay.
Example 11 is the method of example 10, further comprising: generating the gradual slope of the deck by filling at least one ballast compartment located at an end of the relocatable quay distal from the stationary quay with water from the body of water to lower the end of the relocatable quay distal from the stationary quay into the body of water.
Example 12 is the method of example 11, wherein generating the gradual slope of the deck further comprises: lowering the end of the relocatable quay distal from the stationary quay to a position sufficiently below the water level of the water surface of the body of water to generate the separation between the one or more floating units and the deck of the relocatable quay.
Example 13 is the method of example(s) 10-12, wherein lowering the one or more floating units comprises: urging the one or more floating units down the gradual slope of the deck into the body of water using a controlled winching of one or more tethers coupled to the one or more floating units.
Example 14 is the method of example(s) 10-13, wherein positioning at least the portion of the deck of the relocatable quay at the elevation of the surface of the stationary quay comprises: detecting the elevation of the surface of the stationary quay with a stationary quay detector; and raising or lowering at least the portion of the deck of the relocatable quay to the elevation of the surface of the stationary quay.
Example 15 is a system comprising: a deck movably positionable in a body of water adjacent a stationary quay to receive one or more floating units from the stationary quay, the deck comprising a gradual slope, which may be from an elevation of a surface of the stationary quay to a submerged position below a water level of a water surface of the body of water, when the stationary quay is floating in the body of water; an elevator system positionable to raise and lower at least a portion of the deck to receive the one or more floating units and to deploy the one or more floating units into the body of water; and a controller communicatively coupled to the elevator system, the controller positionable to control raising or lowering of at least the portion of the deck to receive the one or more floating units from the stationary quay and to lower an end of the deck distal from the stationary quay to deploy the one or more floating units into the body of water.
Example 16 is the system of example 15, wherein the elevator system comprises: at least two ballast compartments positionable to intake water from the body of water to lower the deck and to eject water into the body of water to raise the platform, wherein the controller controls the intake of the water and the ejection of the water at the at least two ballast compartments, wherein a first ballast compartment of the at least two ballast compartments is positionable to maintain a portion of the deck proximal to the stationary quay at an elevation of the stationary quay, and wherein a second ballast compartment of the at least two ballast compartments is positionable to generate the gradual slope by maintaining a second buoyancy that is less than a first buoyancy of the first ballast compartment.
Example 17 is the system of example 16, wherein the elevator system further comprises: a stationary quay detector positionable to detect the elevation of a surface of the stationary quay, wherein the controller is positionable to raise or lower at least the portion of the deck using the elevation of the surface of the stationary quay.
Example 18 is the system of example 17, further comprising: a deployment system comprising strand jacks, winches, tugs, or a combination thereof and positionable to transition the one or more floating units from the stationary quay to the deck.
Example 19 is the system of example 18, wherein the surface and the deck further comprise a plurality of rollers, a set of rails, a set of air bags, or a set of water bags positionable along a length of the surface of the stationary quay and the gradual slope of the deck to reduce friction between the one or more floating units and the deck.
Example 20 is the system of example(s) 15-19, further comprising: at least one towing bitt positionable to engage a towline such that the system is movable to an additional stationary quay.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

### Brief Description of the Drawings

FIG. 1A is a schematic elevation view of a floating wind turbine according to one example of the present disclosure.
FIG. 1B is a schematic, top view of the floating wind turbine of FIG. 1A, illustrating the generally triangular shape of the floating wind turbine platform.
FIG. 2 is a schematic, side view of an example of a relocatable quay with a gradual slope used to deploy a floating unit according to one example of the present disclosure.
FIG. 3 is a schematic, rear view of the relocatable quay of FIG. 2 used to deploy the floating unit according to one example of the present disclosure.
FIG. 4 is a schematic, side view of an additional example of a relocatable quay used to deploy the floating unit according to one example of the present disclosure.
FIGS. 5A and 5B are schematic, side views of an additional example of a relocatable quay used to deploy a floating unit according to one example of the present disclosure.
FIG. 6 is a flowchart of a process for deploying a floating unit using a relocatable quay according to one example of the present disclosure.

### Detailed Description

Aspects of this disclosure are directed to deploying a floating wind turbine platform that may desirably avoid some of the costs sometimes associated with permanent, tailormade deployment solutions or submersible barges. Certain aspects and examples of the present disclosure relate to deployment of offshore wind turbines and to relocatable, floating quays used to deploy an offshore floating wind turbine platform of the offshore wind turbines using a gradual slope into a body of water. A wind turbine can be mounted to the floating wind turbine platform before or after a launching operation of the floating wind turbine platform to create a floating wind turbine. The wind turbine can include a generator and a rotor blade mounted atop a tower that extends upward from the floating wind turbine platform. Floating wind turbines may be installed at different locations in various bodies of water, including but not limited to, offshore ocean locations. As used herein, the term quay may refer to a deck positioned alongside or in a body of water to enable deployment of components into the body of water. A stationary quay may be existing infrastructure located at the body of water, such as in a shipyard. The floating wind turbine platform may be deployed from the stationary quay at the edge of a body of water near a location where the floating wind turbine platform is assembled, such as in the shipyard. A relocatable quay may be relocated to a location within the body of water along a portion of the stationary quay near the floating wind turbine platform. The relocatable quay may receive the floating wind turbine platform from the stationary quay, and the floating wind turbine platform may be deployed into the body of water using a gradual slope of the relocatable quay.

Examples of a floating wind turbine platform can include a plurality of spaced apart semisubmersible columns that are arranged in a desired pattern. For example, the columns of a floating wind turbine platform may be arranged in a polygonal pattern, with one of the columns located at each vertex of the polygon. In some examples of such an arrangement, the floating wind turbine platform may have a triangular shape, with one of three columns located at each vertex of the triangle. A wind turbine tower may be attached to and extend upward from a top of at least one of the columns or elsewhere between the columns along a truss beam structure that joins the wind turbine tower to the columns.

The relocatable quay may be relocated to receive and deploy one or more floating wind turbine platforms assembled at a stationary quay. In some examples, the relocatable quay may be deployed to a location near the floating wind turbine platform upon completion of the assembly of the floating wind turbine platform. The relocatable quay may be redeployed to different locations alongside the stationary quay, or to other stationary quays at additional locations, to aid in launching additional floating wind turbine platforms.

In some examples, the relocatable quay may include an elevator system that is able to raise and lower at least a portion of deck of the relocatable quay. **The** elevator system may include one or more ballast compartments positionable to intake water from the body of water to lower the deck of the relocatable quay and to eject water into the body of water to raise the deck of the relocatable quay. By raising and lowering the deck of the relocatable quay, the deck of the relocatable quay may be positioned at an elevation that is even with the elevation of the stationary quay to aid in receiving the floating wind turbine platform from the stationary quay through horizontal transfer from the stationary quay to the relocatable quay using external installations such as a strand jack, winches, self-propelled modular transporter (SPMT) systems, a push-pull unit, or any other external installations. Further, portions of the deck of the relocatable quay may be raised or lowered into the body of water in a manner that enables control of a severity of the gradual slope of the relocatable quay such that the floating wind turbine platform can be launched into the body of water.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

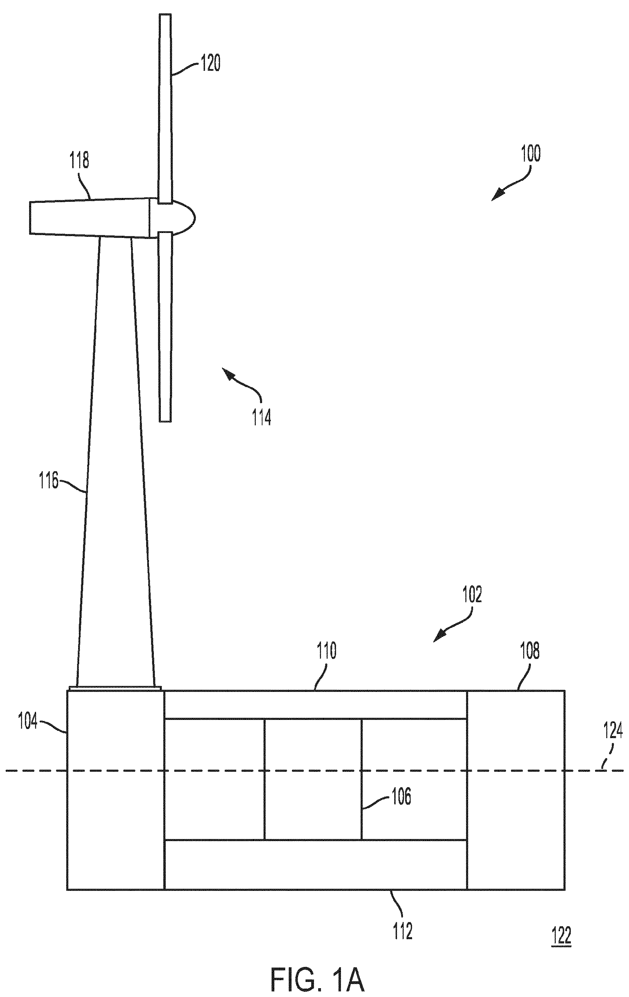

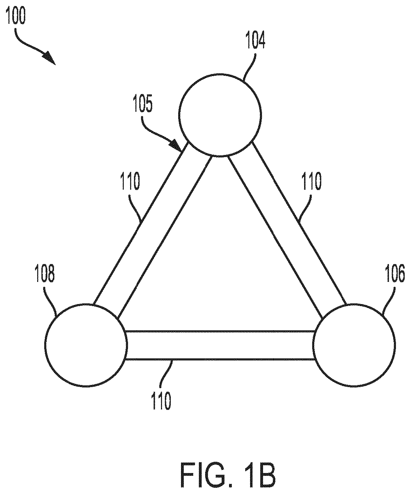

FIG. 1A is a schematic elevation view of a floating wind turbine 100. As shown, the floating wind turbine 100 includes a floating wind turbine platform 102. In this example, the floating wind turbine platform 102 includes three spaced apart semisubmersible columns 104, 106, 108. The platform 102 may define a generally triangular shape (see, e.g., FIG. 1B) with the columns 104, 106, 108 respectively arranged at three points of a triangle. A different number of columns and other arrangements of the columns are possible in other examples. The columns 104, 106, 108 are interconnected by upper connecting members 110, such as deck beams, and lower connecting members 112, such as pontoons, that structurally connect the columns 104, 106, 108 of the floating wind turbine platform 102. The upper connecting members 110 and the lower connecting members 112 may be assembled with the columns 104, 106, 108 on a stationary quay prior to deployment into a body of water 122. A wind turbine 114 may be affixed to the floating wind turbine platform 102, as shown. In some examples, the wind turbine 114 may be installed after the floating wind turbine platform 102 is deployed into the body of water 122. The wind turbine 114 may include an upwardly-extending tower 116, a nacelle 118 enclosing a gearbox and a generator, and a rotatable rotor blade 120. The wind turbine tower 116 may be securely affixed to the top of a first column 104 in the example of FIG. 1A, but other wind turbine locations and affixation techniques relative to the floating wind turbine platform 102 are possible in additional examples.

As represented in FIG. 1A, the floating wind turbine platform 102 has been deployed into the body of water 122. The surface 124 of the body of water 122 is indicated by a dashed line. The location of the surface 124 of the body of water 122 relative to the columns 104, 106, 108 may be adjusted by ballast compartments of the columns 104, 106, 108 or the lower connecting members 112 depending on water and wind conditions during operation of the floating wind turbine 100. For example, the ballast compartments may be maintained, as also represented in FIG. 1A, in a manner that keeps the floating wind turbine platform 102 at a substantially level floating orientation in the body of water 122.

FIG. 1B is a schematic, top view of the floating wind turbine 100 of FIG. 1A, illustrating the generally triangular shape of the floating wind turbine platform 102. Each column 102, 104, 106 is located at a respective one of the vertices of the triangle 105.

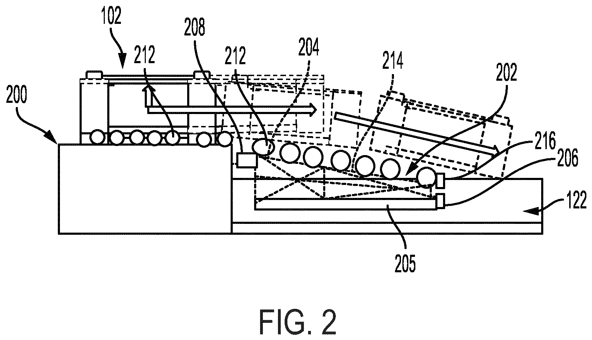

FIG. 2 is a schematic, side view of an example of a relocatable quay 202 used to deploy the floating wind turbine platform 102 according to one example of the present disclosure. The relocatable quay 202, also referred to herein as a floating quay, may include a deck 204 and an elevator system that raises and lowers the deck 204 relative to a stationary quay 200 to receive and deploy the floating wind turbine platform 102. **In** an example, the elevator system may include one or more ballast compartments 205 that raise and lower relocatable quay 202 relative to the stationary quay 200. For example, the one or more ballast compartments 205 may raise the relocatable quay 202 by ejecting water from the one or more ballast compartments 205 to the body of water 122 and lower the relocatable quay 202 by intaking water from the body of water 122 into the one or more ballast compartments 205. By raising and lowering the relocatable quay 202, the relocatable quay 202 may receive the floating wind turbine platform 102 from the stationary quay 200 and deploy the floating wind turbine platform 102 into the body of water 122.

As shown in FIG. 2, the elevator system may further include a controller 206 that controls the elevation of the deck 204. **In** some examples, the elevator system may include an instrumented outrigger that is able to measure loads of the deck 204, a stationary quay detector 208 that detects a vertical distance between a surface of the stationary quay 200 and a surface of the deck 204, or a combination thereof. **The** stationary quay detector 208 may be a laser distance detector that is able to determine the vertical distance between the surface of the stationary quay 200 and the surface of the deck 204. Other types of detectors capable of determining the vertical distance between the surface of the stationary quay 200 and the surface of the deck 204 may also be used, such as visual sensors able to monitor markings along the stationary quay 200 to determine a height of the deck 204. The controller 206 may use the vertical distance detected by the stationary quay detector 208 to maintain the elevation of the deck 204 at an elevation level with the surface of the stationary quay 200 prior to receiving the floating wind turbine platform 102.

When the deck 204 achieves an elevation similar to the surface of the stationary quay 200, a loadout operation of the floating wind turbine platform 102 may commence. The floating wind turbine platform 102 may be loaded out to the relocatable quay 202 using a sliding system. The sliding system may include rollers 212, as depicted in FIG. 2. In additional examples, the rollers 212 may be replaced by, or supplemented using, water bags, air bags, self-propelled modular transporters (SPMTs), rails, or a combination thereof. In additional examples, a deployment system including strand jacks, winches, tugs, or a combination thereof may be used to loadout the one or more columns from the stationary quay to the deck. Upon loadout of the floating wind turbine platform 102, the floating wind turbine platform 102 may be lowered into the body of water 122 along a gradual slope 214 of the relocatable quay 202 using additional rollers 212, or other water bags, air bags, **SPMTs,** or rails. **In** examples using the rollers 212 along the relocatable quay 202, the rollers 212 may reduce friction generated between the floating wind turbine platform 102 and the relocatable quay 202. Further, the rollers 212, in some examples, may include a known frictional resistance to limit or otherwise reduce a velocity at which the floating wind turbine platform 102 enters the body of water 122. **The** floating wind turbine platform 102 may be moored to the stationary quay 200, in some examples. **In** such an example, the tethers affixed to the stationary quay 200 may be gradually released using, for example, a winching mechanism to deploy the floating wind turbine platform 102 into the body of water 122 in a controlled manner.

Upon completion of the launch of the floating wind turbine platform 102, the relocatable quay 202, which may have a positive buoyancy in the body of water 122, may couple to a towing vehicle, such as a tug, using tow lines attached to a towing bitt 216. **The** towing vehicle may transport the relocatable quay 202 to an additional location at the stationary quay 200 or to an additional stationary quay for use by an additional floating wind turbine platform 102.

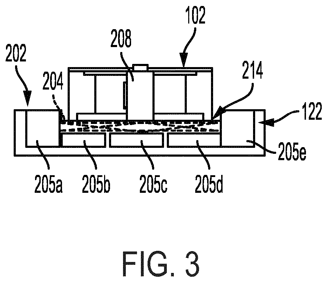

FIG. 3 is a schematic, rear view of the relocatable quay of 202 used to deploy the floating wind turbine platform 102. While only the individual ballast compartment 205 is shown in FIG. 2, more ballast compartments 205a-e can be used in the relocatable quay 202, as shown in FIG. 3. **The** elevator system of the relocatable quay 202 may raise and lower the relocatable quay 202 by purging or filling the ballast components 205a-e with water. While five ballast compartments 205a-e are depicted in FIG. 3, more or fewer ballast compartments may be used.

As discussed above with respect to FIG. 2, the relocatable quay 202 may further include the controller 206 that controls the ballast of the ballast compartments 205a-e. **In** some examples, the elevator system may include the stationary quay detector 208, as shown in FIG. 2, that detects a vertical distance between a surface of the stationary quay 200 and a surface of the deck 204. **The** controller 206 may use the vertical distance detected by the stationary quay detector 208 to maintain the elevation of the deck 204 at an elevation level with the surface of the stationary quay 200 prior to receiving the floating wind turbine platform 102. **The** controller 206 maintains the desired elevation by controlling the ballast within the ballast compartments 205a-e. **In** some examples, the controller 206 may also control the ballast of the ballast compartments 205a-205e to achieve and maintain a level surface of the deck 204.

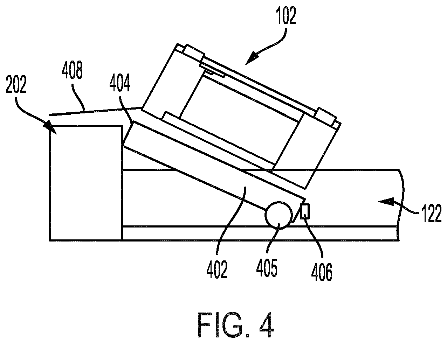

FIG. 4 is a schematic, side view of an additional example of a relocatable quay 402 used to deploy the floating wind turbine platform 102 according to one example of the present disclosure. **The** relocatable quay 402, also referred to herein as a floating quay, may include a deck 404 and an elevator system that raises and lowers a portion of the deck 404 relative to the stationary quay 200 to receive and deploy the floating wind turbine platform 102. **In** an example, the elevator system may include one or more ballast compartments 405 that raise and lower an end of the relocatable quay 402 distal from the stationary quay 200. For example, the one or more ballast compartments 405 may raise the distal end of the relocatable quay 402 by ejecting water from the one or more ballast compartments 405 to the body of water 122 and lower the relocatable quay 402 by intaking water from the body of water 122 into the one or more ballast compartments 405. By raising and lowering the relocatable quay 402, the relocatable quay 402 may receive the floating wind turbine platform 102 from the stationary quay 200 while the deck 404 of the relocatable quay 402 has a very small or no slope relative to the surface of the stationary quay 200. Further, the relocatable quay 402 may deploy the floating wind turbine platform 102 into the body of water 122 by increasing the slope relative to the surface of the stationary quay 200 to a gradual slope, as depicted in FIG. 4.

In some examples, a proximal end of the relocatable quay 402 to the stationary quay 200 may be coupled to or otherwise affixed to the stationary quay 200 in a manner that creates a pivot between the relocatable quay 402 and the stationary quay 200 when the distal end of the relocatable quay 402 is lowered into the body of water 122. For example, the relocatable quay 402 may pivot at the proximal end attached to the stationary quay 200 while the distal end of the relocatable quay is lowered into the body of water 122 to deploy the floating wind turbine platform 102. In some examples, the pivot point may be generated by positioning an additional ballast compartment 405 at the proximal end of the relocatable quay 402 such that the proximal end of the relocatable quay 402 continues to float as the distal end is lowered into the body of water 122. In additional examples, the proximal end of the relocatable quay 402 may couple directly to the stationary quay 200 in a pivotable manner. Further, the deck 404, in some examples, may include a horizontal section positionable to engage the stationary quay. In such an example, a hinge may be positioned between the horizontal section and the portion of the deck 404 that results in the gradual slope such that a magnitude of the gradual slope is adjustable at the hinge.

As shown in FIG. 4, the elevator system may further include a controller 406 that controls the elevation of the distal end of the deck 404. The controller 406 may maintain the elevation of the deck 404 at an elevation level with the surface of the stationary quay 200 prior to receiving the floating wind turbine platform 102. While the deck 404 is at an elevation similar to the surface of the stationary quay 200, a loadout operation of the floating wind turbine platform 102 may commence. The floating wind turbine platform 102 may be loaded out to the relocatable quay 402 using a sliding system. The sliding system may include rollers 212, as depicted in FIG. 2. In additional examples, the rollers 212 may be replaced by or supplemented using water bags, air bags, self-propelled modular transporters (SPMTs), rails, or a combination thereof.

Upon loadout of the floating wind turbine platform 102, the floating wind turbine platform 102 may be lowered into the body of water 122 along a gradual slope of the relocatable quay 402, where the gradual slope is generated by the controller 406 purging ballast from the ballast compartment 405. Further, the floating wind turbine platform 102 may be moored to the stationary quay 200 using tethers 408, in some examples. In such an example, the tethers 408 may be gradually released using, for example, a winching mechanism to provide controlled winching of the floating wind turbine platform 102 into the body of water 122 along the gradual slope of the relocatable quay 402.

Upon completion of the launch of the floating wind turbine platform 102, the relocatable quay 402, which may have a positive buoyancy in the body of water 122, may couple to a towing vehicle using tow lines attached to a towing bitt, such as the towing bitt 216 depicted in FIG. 2. The towing vehicle may include a tugboat located in the body of water 122, or the towing vehicle may be a surface based vehicle on the stationary quay 200, such as a truck or trailer. The towing vehicle may transport the relocatable quay 402 to an additional location at the stationary quay 200 or to an additional stationary quay for use in launching an additional floating wind turbine platform 102.

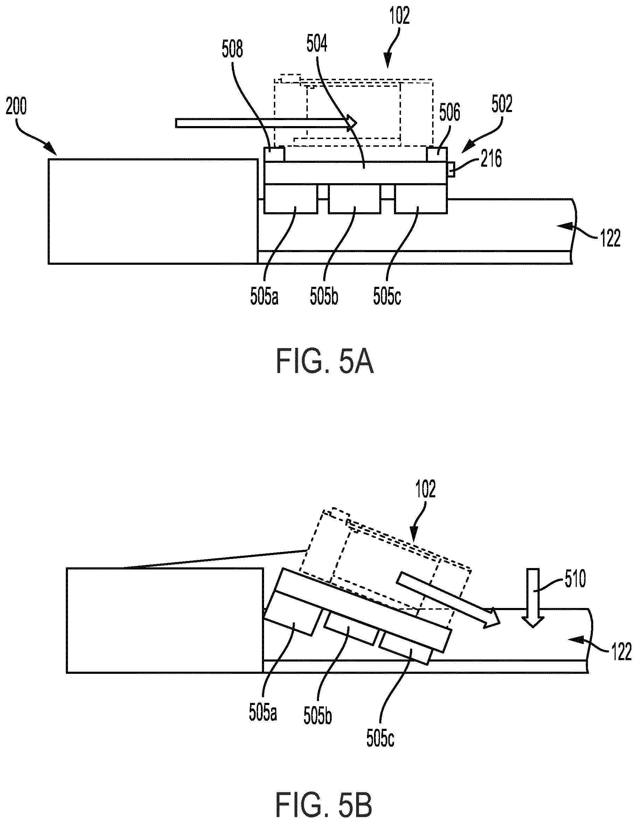

FIGS. 5A and 5B are schematic, side views of an additional example of a relocatable quay 502 used to deploy the floating wind turbine platform 102 according to one example of the present disclosure. The relocatable quay 502, also referred to herein as a floating quay, of FIGS. 5A and 5B may include an elevator system that includes three or more ballast compartments 505a-c that raise and lower portions of the relocatable quay 502 relative to the stationary quay 200. For example, the one or more ballast compartments 505 may raise portions of the relocatable quay 502 by ejecting water from one or more of the ballast compartments 505 to the body of water 122 and lower the relocatable quay 502 by intaking water from the body of water 122 into one or more of the ballast compartments 505. By raising and lowering the relocatable quay 502, the relocatable quay 502 may receive the floating wind turbine platform 102 from the stationary quay 200 and deploy the floating wind turbine platform 102 into the body of water 122.

As shown in FIG. 5A, the elevator system may further include a controller 506 that controls the elevation of a deck 504 of the relocatable quay 502. The elevator system may include a stationary quay detector 508 that detects a vertical distance between a surface of the stationary quay 200 and a top surface of the deck 504. The controller 506 may use the vertical distance detected by the stationary quay detector 508 to maintain the elevation of the deck 504 at an elevation level with the surface of the stationary quay 200 prior to receiving the floating wind turbine platform 102.

When the deck 504 achieves an elevation similar to the surface of the stationary quay 200, a loadout operation of the floating wind turbine platform 102 may commence. The floating wind turbine platform 102 may be loaded-out to the relocatable quay 502, as illustrated in FIG. 5A, using a sliding system. The sliding system may include rollers, water bags, air bags, self-propelled modular transporters (SPMTs), rails, or a combination thereof.

Upon completion of the loadout operation, the elevator system may lower the floating wind turbine platform 102 into the body of water 122, as depicted in FIG. 5B. The elevator system, using the controller 506, may control intake of ballast into one or more of the ballast compartments 505a-c to lower at least a portion of the relocatable quay 502 in a direction 510 to generate a gradual slope from the stationary quay 200 to the body of water 122. For example, the controller 506 may control the ballast compartments 505b and 505c to a buoyancy that is less than a buoyancy of the ballast compartment 505a to generate the gradual slope. By generating the gradual slope toward the body of water 122, the floating wind turbine platform 102 may be launched along the gradual slope and into the body of water 122.

Turning back to FIG. 5A, upon completion of the launch of the floating wind turbine platform 102, the relocatable quay 502 may couple to a towing vehicle with tow lines that are attached to a towing bitt 216. The towing vehicle may include a tugboat located in the body of water 122, or the towing vehicle may be a surface based vehicle on the stationary quay 200, such as a truck or trailer. The towing vehicle may transport the relocatable quay 502 to an additional location at the stationary quay 200 or to an additional stationary quay for use in launching an additional floating wind turbine platform 102.

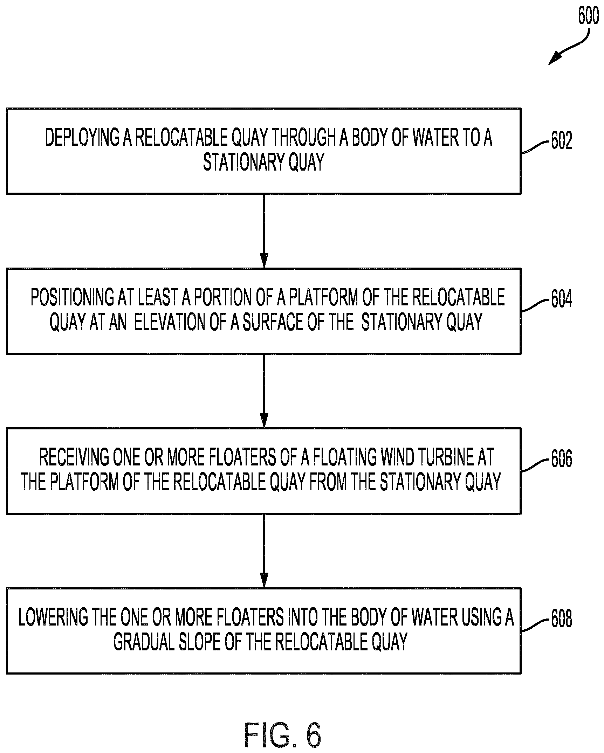

FIG. 6 is a flowchart of a process 600 used to deploy or recover a floating unit, such as the floating wind turbine platform 102, using a relocatable quay 202, 402, 502 according to one example of the present disclosure. At block 602, the process 600 involves deploying a relocatable quay through the body of water 122 to the stationary quay 200. The relocatable quay may be towed using a tugboat or a shore-based towing vehicle to position the relocatable quay at a desired location alongside the stationary quay 200. Since the relocatable quay is able to move from position to position, the relocatable quay may be repositioned when a floating wind turbine platform 102 is ready for deployment into the body of water 122 from the stationary quay 200. While the process 600 is generally described with respect to a floating wind turbine platform, it may be appreciated that any other floating units may be launched or recovered using relocatable quays and the process 600 with minimal changes. In some examples, the process 600 may also be reversed to recover the floating wind turbine platform 102 from the body of water 122.

At block 604, the process 600 involves positioning at least a portion of a deck of the relocatable quay at an elevation of a surface of the stationary quay 200. In an example, the relocatable quay may include an elevator system that includes a stationary quay detector 208. The stationary quay detector 208 may detect a vertical distance between the deck of the relocatable quay and the surface of the stationary quay 200. The controller 206 of the elevator system may control raising or lowering of the relocatable quay to minimize the detected vertical distance such that the floating wind turbine platform 102 is loadable from the stationary quay 200 onto the deck 204 of the relocatable quay.

At block 606, the process 600 involves receiving one or more floaters, such as columns 104 of a floating wind turbine platform 102, at the deck of the relocatable quay from the stationary quay 200. **In** an example, the one or more columns received at the deck 204 may also include upper connecting members 110 and lower connecting members 112 installed between the columns 104. **The** combination of the columns and the connecting members 110, 112 received at the deck 204 may be referred to as the floating wind turbine platform 102. **The** wind turbine tower 116 may be added to the floating wind turbine platform upon deployment of the floating wind turbine platform into the body of water 122.

At block 608, the process 600 involves lowering the one or more columns 104 into the body of water 122 along a gradual slope of the relocatable quay. **In** some examples, the elevator system of the relocatable quay may control the magnitude of the gradual slope from the surface of the stationary quay 200 into the body of water 200. For example, the controller 206 of the elevator system may control the intake of ballast from the body of water 122 into one or more of the ballast compartments of the relocatable quay to lower at least a portion of the relocatable quay into the body of water 122 to generate the gradual slope. A distal end of the relocatable quay may be lowered below a surface of the body of water 122 in a manner sufficient to generate separation between the one or more columns and the deck of the relocatable quay. In this manner, the floating wind turbine platform 102 may be deployed into the body of water 122 along the gradual slope. In additional examples, the relocatable quay, such as the relocatable quay 202 may include a permanent gradual slope from the surface of the stationary quay 200 into the body of water 122.

The controller 206, 406, 506, which may be used to raise and lower the portions of the relocatable quay within the body of water 122, may include a processor and a memory. In a non-limiting example, the memory can include instructions that are executable by the processor for causing the processor to perform operations that raise and lower the relocatable quay or a portion of the relocatable quay within the body of water 122. Initiation of such operations may, in some non-limiting examples, be based on signals from the stationary quay detector 208, which may be communicatively coupled to the controller.

In a non-limiting example, the components of the elevator system, which may include the controller 206, 406, 506 and the stationary quay detector 208, 508, may reside in various locations relative to the relocatable quay. In some non-limiting examples, a processor of the controller may be communicatively coupled to a memory of the controller by a bus. The processor can include one processor or multiple processors. Non-limiting examples of the processor include a Field-Programmable Gate Array (FPGA), an application specific integrated circuit (ASIC), a microprocessor, or any combination of these. Instructions executable by the processor may be stored in the memory, along with other information such as ranges of acceptable floating wind turbine platform inclination or other parameters.

In a non-limiting example, the instructions are executable by the processor for causing the processor to perform various operations, such as raising and lowering the floating wind turbine platform. In some examples, the instructions can include, but are not limited to including, processor specific instructions generated by a compiler or an interpreter from code written in any suitable computer-programming language, such as C, C++, C#, Java, or Python. Through the instructions, the processor may, in some non-limiting examples, operate to adjust an elevation of a surface of a relocatable quay.

The memory of the controller can include one memory device or multiple memory devices. In a non-limiting example, the memory can be non-volatile and may include any type of memory device that retains stored information when powered off. Non-limiting examples of the memory include electrically erasable and programmable read-only memory (EEPROM), flash memory, or any other type of non-volatile memory. At least some of the memory device can include, but is not limited to including, a non-transitory computer-readable medium from which the processor can read the instructions. In a non-limiting example, a non-transitory computer-readable medium can include electronic, optical, magnetic, or other storage devices capable of providing the processor with the instructions or other program code. Non-limiting examples of a non-transitory computer-readable medium include magnetic disk(s), memory chip(s), ROM, random-access memory (RAM), an ASIC, a configured processor, optical storage, or any other medium from which a computer processor can read the instructions.

In one example, a floating quay includes a deck relocatable in a body of water to a position adjacent a stationary quay. The floating quay may receive one or more columns of a floating wind turbine platform. The deck of the floating quay, upon deployment of the one or more columns into the body of water, may include a gradual slope from an elevation of a surface of the stationary quay to a submerged position below a water level of a water surface of the body of water. The deck can comprise a gradual slope when the floating quay is located in a horizontal orientation.

The floating quay may also include an elevator system that is able to raise and lower at least a portion the deck to receive the one or more columns of the floating wind turbine platform from the stationary quay. Further, the elevator system may be used to aid in deploying the one or more columns into the body of water by controlling the gradual slope of the deck. For example, the elevator system may be used to raise or lower a portion of the deck to control a magnitude of the gradual slope.

In some examples, the elevator system may include a stationary quay detector positionable to detect the elevation of a surface of the stationary quay. The elevator system may also include a controller positionable to control raising and lowering of at least a portion of the deck using the elevation of the surface of the stationary quay. The elevator system may also include at least one ballast compartment positionable to intake water from the body of water to lower the deck and to eject water into the body of water to raise the deck. In such an example, the controller controls the intake of the water and the ejection of the water at the at least one ballast compartment.

In some examples, the floating quay may include multiple ballast compartments. For example, a first ballast compartment may be used to maintain a first end of the deck at the elevation of the surface of the stationary quay. Further, a second ballast compartment may be used to adjust a magnitude of the gradual slope of the deck from the elevation of the surface of the stationary quay into the submerged position. The second ballast compartment, in such an example, may be located at a side of the deck distal from the stationary quay. The controller may control purging of water from the second ballast compartment prior to the one or more columns being loaded on the deck. The controller may also control an intake of water into the ballast compartment subsequent to the one or more columns being loaded on the deck to generate the gradual slope of the deck. In an example, the controller may lower the distal end of the deck to a position below the water level of the water surface of the body of water to generate separation between the position of the deck and the one or more columns as the one or more columns are deployed down the gradual slope into the body of water.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A floating quay comprising:
a deck relocatable in a body of water to a position adjacent a stationary quay to receive one or more floating units, the deck comprising a gradual slope; and
an elevator system positionable to raise and lower at least a portion of the deck to receive the one or more floating units from the stationary quay and to deploy the one or more floating units into the body of water using the gradual slope of the deck;
optionally, wherein the deck further comprises a plurality of rollers, a set of rails, a set of air bags, a set of water bags, or a combination thereof positionable along a length of the gradual slope to reduce friction between the one or more floating units and the deck.

2. The floating quay of claim 1, wherein the elevator system further comprises:
a stationary quay detector positionable to detect the elevation of a surface of the stationary quay; and
a controller positionable to control raising or lowering of at least the portion of the deck using the elevation of the surface of the stationary quay.

3. The floating quay of claim 2, wherein the elevator system further comprises:
at least one ballast compartment positionable to intake water from the body of water to lower the deck and to eject water into the body of water to raise the deck, wherein the controller controls the intake of the water and the ejection of the water at the at least one ballast compartment.

4. The floating quay of claim 3, wherein the at least one ballast compartment comprises:
a first ballast compartment positionable to maintain a first end of the deck at the elevation of the surface of the stationary quay; and
a second ballast compartment positionable to adjust a magnitude of the gradual slope of the deck from the elevation of the surface of the stationary quay into the submerged position.

5. The floating quay of claim 3, wherein the at least one ballast compartment is positionable at a side of the deck distal from the stationary quay, and wherein the controller is positionable to control purging of water from the ballast compartment prior to the one or more floating units being loaded on the deck and to control intake of water into the ballast compartment subsequent to the one or more floating units being loaded on the deck to generate the gradual slope of the deck.

6. The floating quay of claim 1, , wherein the deck further comprises:
a horizontal section positionable to engage the stationary quay; and
a hinge positionable between the horizontal section and the gradual slope such that a slope of the gradual slope is adjustable at the hinge.

7. The floating quay of claim 1, further comprising:
at least one towing bitt positionable to engage a towline such that the floating quay is movable to an additional stationary quay.

8. The floating quay of claim 1, wherein the elevator system is positionable to lower the submerged position of the deck below the water level of the water surface of the body of water to generate separation between the submerged position of the deck and the one or more floating units.

9. A method comprising:
deploying a relocatable quay through a body of water to a stationary quay;
positioning at least a portion of a deck of the relocatable quay at an elevation of a surface of the stationary quay;
receiving one or more floating units at the deck of the relocatable quay from the stationary quay; and
lowering the one or more floating units into the body of water using a gradual slope of the deck to generate separation between the one or more floating units and the deck of the relocatable quay.

10. **The** method of claim 9, further comprising:
generating the gradual slope of the deck by filling at least one ballast compartment located at an end of the relocatable quay distal from the stationary quay with water from the body of water to lower the end of the relocatable quay distal from the stationary quay into the body of water;
optionally, wherein generating the gradual slope of the deck further comprises:
lowering the end of the relocatable quay distal from the stationary quay to a position sufficiently below the water level of the water surface of the body of water to generate the separation between the one or more floating units and the deck of the relocatable quay.

11. The method of claim 9, wherein lowering the one or more floating units comprises:
urging the one or more floating units down the gradual slope of the deck into the body of water using a controlled winching of one or more tethers coupled to the one or more floating units.

12. The method of claim 9, wherein positioning at least the portion of the deck of the relocatable quay at the elevation of the surface of the stationary quay comprises:
detecting the elevation of the surface of the stationary quay with a stationary quay detector; and
raising or lowering at least the portion of the deck of the relocatable quay to the elevation of the surface of the stationary quay.

13. A system comprising:
a deck movably positionable in a body of water adjacent a stationary quay to receive one or more floating units from the stationary quay, the deck comprising a gradual slope;
an elevator system positionable to raise and lower at least a portion of the deck to receive the one or more floating units and to deploy the one or more floating units into the body of water; and
a controller communicatively coupled to the elevator system, the controller positionable to control raising or lowering of at least the portion of the deck to receive the one or more floating units from the stationary quay and to lower an end of the deck distal from the stationary quay to deploy the one or more floating units into the body of water;
optionally, further comprising:
at least one towing bitt positionable to engage a towline such that the system is movable to an additional stationary quay.

14. **The** system of claim 13, wherein the elevator system comprises:
at least two ballast compartments positionable to intake water from the body of water to lower the deck and to eject water into the body of water to raise the deck,
wherein the controller controls the intake of the water and the ejection of the water at the at least two ballast compartments,
wherein a first ballast compartment of the at least two ballast compartments is positionable to maintain a portion of the deck proximal to the stationary quay at an elevation of the stationary quay, and
wherein a second ballast compartment of the at least two ballast compartments is positionable to generate the gradual slope by maintaining a second buoyancy that is less than a first buoyancy of the first ballast compartment.

15. **The** system of claim 14, wherein the elevator system further comprises:
a stationary quay detector positionable to detect the elevation of a surface of the stationary quay, wherein the controller is positionable to raise or lower at least the portion of the deck using the elevation of the surface of the stationary quay;
optionally, further comprising:
a deployment system comprising strand jacks, winches, tugs, or a combination thereof and positionable to transition the one or more floating units from the stationary quay to the deck;
or, wherein the surface and the deck further comprise a plurality of rollers, a set of rails, a set of air bags, or a set of water bags positionable along a length of the surface of the stationary quay and the gradual slope of the deck to reduce friction between the one or more floating units and the deck.
